# EUROPEAN PATENT APPLICATION

(11) **EP 2 944 841 A1**
(43) Date of publication of application: **18.11.2015**
(21) Application number: 15154248.7
(22) Date of filing: 09.02.2015
(51) Int. Cl.: F16D 65/097

(54) **Brake torque abutment**

(30) Priority: 20.03.2014 US 201414220306
(71) Applicant: AKEBONO BRAKE INDUSTRY CO., LTD., Tokyo 103-8534 (JP)
(72) Inventor: Lou, Gang, Rochester, MI Michigan 48306 (US); Brackmann, Larry William, Beverly Hills, Michigan 48025 (US)
(74) Representative: Kutzenberger Wolff & Partner

(57) **Abstract**

A brake pad comprising: (a) friction material and (b) a pressure plate comprising: (i) an ear (14) on a trailing side and (ii) an ear (14) on a leading side; wherein the ear on the trailing side and the ear on the leading side are configured for placement in a trailing abutment (10) and a leading abutment (10) of a support bracket respectively so that during a brake apply the ear on the trailing side is moved into contact with the abutment on the trailing side or the ear on the leading side is moved into contact with the abutment on the leading side; and wherein the ear on the trailing side, the ear on the leading side, or both include an arcuate segment (40) forming a concave recess that has a continuous curvature.

## Description

### FIELD

The present teachings relate to an abutment surface of a support bracket, a brake pad, and/or pad clip and their relationship relative to each other.

### BACKGROUND

The present teachings are predicated upon providing an improved abutment surface of a brake pad, pad clip, support bracket, or a combination thereof of a disc brake system for use with vehicles. For example, the disc brake system may be used with almost any vehicle (e.g. car, truck, bus, train, airplane, or the like). Alternatively, the disc brake system may be integrated into assemblies used for manufacturing or other equipment that require a brake such as a lathe, winder for paper products or cloth, amusement park rides, wind turbines, or the like. However, the present teachings are most suitable for use with a passenger vehicle (e.g., a car, truck, sports utility vehicle, or the like).

Generally, a braking system includes a rotor, a caliper body, a support bracket, an inboard brake pad, and an outboard brake pad that are on opposing sides of the rotor. The caliper body further includes one or more fingers (with or without a piston), one or more piston bores, and a bridge that connects the one or more fingers to the piston bore or two opposing piston bores together. The piston bore houses a piston. The piston bore has a bore axis that the piston moves along during a brake apply and a brake release. The piston bore may include a fluid inlet, a closed wall, a front opening, and a cylindrical side wall that includes a seal groove located near the front opening. Typically, the fluid inlet is located in the closed wall of the piston bore so that when pressure is applied the fluid will flow into the piston bore. During a pressure apply the fluid will push the piston towards the front opening and into contact with a brake pad that generally includes a pressure plate and friction material and the friction material will contact the rotor on one side and an opposing brake pad will contact the rotor on an opposing side creating friction to stop rotation of the rotor and any component connected to the brake system. The brake pads may slide on an abutment along an axis of the pistons or the brake pads may include holes that receive pins and the brake pads may slide on pins that extend through the brake system so that a friction force may be created. During non-braking conditions (i.e., running) the brake pads may move within the brake system, for example from vibration input from the road, and contact other components of the brake system such as a support bracket, a pad clip, or both causing a rattling noise that may be heard by a user and/or an occupant of a vehicle.

During running conditions the brake pad may move laterally, radially, tangentially, or a combination thereof into contact with one or more surfaces of the support bracket causing a rattling noise that may be heard by a user and/or occupant. These noises when heard by a user may be irritating, may cause concern to a user, or both. Further, this may cause a user to request the manufacturer to spend time and money troubleshooting the noise which may result in repairs and/or replacement of parts. Therefore, it is desirable to have a brake system that does not produce audible noises during movement of the brake system, use, or both.

Examples of brake systems including abutment surfaces are disclosed in U.S. Patent Nos. 5,109,959; 5,427,213; 6,186,288 all of which are expressly incorporated herein by reference for all purposes. It would be attractive to have a contact surface that reduces the movement of the brake pad relative to the support bracket so that contact between the brake pad and support bracket is substantially reduced and/or eliminated. It would be attractive to have an abutment surface that directs energy of the brake pad in such a manner that impact between the brake pad and support bracket has a reduced force and/or substantially no force. What is needed is an abutment contact region that significantly restricts movement of a brake pad so that an impact with the support bracket creating a rattling noise is reduced and/or eliminated.

### SUMMARY

One possible example of the present teachings include: a brake pad comprising: (a) friction material and (b) a pressure plate comprising: (i) an ear on a trailing side and (ii) an ear on a leading side; wherein the ear on the trailing side and the ear on the leading side are configured for placement in a trailing abutment and a leading abutment of a support bracket respectively so that during a brake apply the ear on the trailing side is moved into contact with the abutment on the trailing side or the ear on the leading side is moved into contact with the abutment on the leading side; and wherein the ear on the trailing side, the ear on the leading side, or both include an arcuate segment forming a concave recess that has a continuous curvature.

One possible embodiment of the present teachings include: support bracket comprising: (a) a leading side and (b) a trailing side, the leading side and the trailing side both comprising: (i) a projection and (ii) an abutment located below the projection; wherein the abutment includes a convex arcuate segment.

Another possible embodiment of the present teachings include: a brake system comprising: (a) a caliper; (b) support bracket in communication with the caliper, the support bracket comprising: (i) a leading side and (ii) a trailing side, the leading side and the trailing side both comprising: (1) a projection and (2) an abutment located below the projection; wherein the abutment includes a convex arcuate segment; (c) an inboard brake pad and an outboard brake pad each comprising: (i) friction material and (ii) a pressure plate comprising: (1) an ear on a trailing side and (2) an ear on a leading side; wherein the ear on the trailing side and the ear on the leading side are in communication with the abutment on the trailing side and the leading side of the support bracket respectively so that during a brake apply the ear on the trailing side is moved into contact with the abutment on the trailing side or the ear on the leading side is moved into contact with the abutment on the leading side; wherein the ear on the trailing side, the ear on the leading side, or both include an arcuate segment forming a concave recess; (d) a pad clip located between the support bracket and the inboard brake pad and the outboard brake pad respectively, wherein the pad clip includes an arcuate segment; and wherein the arcuate segment of the support bracket, the pad clip, and the ear of the inboard brake pad and the ear of the outboard brake pad are complementary.

The present teachings provide a contact surface that reduces the movement of the brake pad relative to the support bracket so that contact between the brake pad and support bracket is substantially reduced and/or eliminated. The present teachings provide an abutment surface that directs energy of the brake pad in such a manner that impact between the brake pad and support bracket has a reduced force and/or substantially no force. The present teachings provide an abutment contact region that significantly restricts movement of a brake pad so that an impact with the support bracket creating a rattling noise is reduced and/or eliminated..

### BRIEF DESCRIPTION OF THE DRAWINGS

FIG. 1 illustrates a side view of an exemplary brake system of the teachings herein;
FIG. 2 illustrates a partial brake system including a brake pad and pad clip of the teachings herein;
FIG. 3 illustrates an enlarged view of the circled portion labeled FIG. 3 in FIG. 2 showing an ear of the brake pad, the pad clip and a support bracket;
FIG. 4 illustrates an enlarged view of the circled portion labeled FIG. 4 in FIG. 2 showing an ear of the brake pad, the pad clip and a support bracket;
FIG. 5 illustrates an enlarged view of an abutment of the support bracket of the teachings herein;
FIG. 6 illustrates an enlarged view of an ear of a brake pad of the teachings herein; and
FIG. 7 illustrates an enlarged view of another ear of a brake pad of the teachings herein.

### DETAILED DESCRIPTION

The explanations and illustrations presented herein are intended to acquaint others skilled in the art with the invention, its principles, and its practical application. Those skilled in the art may adapt and apply the invention in its numerous forms, as may be best suited to the requirements of a particular use. Accordingly, the specific embodiments of the present invention as set forth are not intended as being exhaustive or limiting of the teachings. The scope of the teachings should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

The present teachings provide a brake system that may be used to create a braking force. The brake system may generally include a rotor, a caliper, one or more brake pads, and a support bracket. The brake system may include one or more pistons. The brake system may include opposing pistons. Preferably, the brake system includes one or more pistons on one side of a rotor so that when the one or more pistons move, a brake pad is moved into contact with a rotor, the caliper moves until fingers move an opposing brake pad into contact with an opposing side of the rotor, or both.

The caliper may function to assist in creating a friction force during a brake apply. The caliper may include one or more pistons that move during a brake apply to create a friction force. The caliper may include one or more pistons on each side of the caliper so that the caliper is substantially static during a brake apply. The caliper body may include a bridge, one or more fingers, and one or more piston bores. The one or more piston bores house the one or more pistons and may include any, all, or a combination of a fluid inlet, a closed wall, a front opening, a cylindrical side wall that includes an annular groove near the front opening, and a seal in the annular groove. The piston bore includes a piston bore axis that the piston moves along during a brake apply. The caliper and the support bracket may be one unitary piece. Preferably, the support bracket and caliper may be two discrete pieces that work in conjunction with each other. The support bracket may connect the caliper indirectly to a corner module. The support bracket may provide support to the caliper so that the caliper moves during a brake apply. The support bracket may be sized so that the caliper extends on both sides of the support bracket and a rotor extends through a center of the support bracket.

The support bracket may function to connect the brake system to a device such as a corner module (e.g., a knuckle), support the brake pads and/or other components of the brake system, or both. The support bracket may be any static part of the brake system. The support bracket may directly or indirectly support the brake pads. The support bracket may include one or more pad clips that assist in holding the one or more brake pads. The support bracket preferably comprises a leading side and a trailing side. The leading side, the trailing side, or both, may further comprise a projection, a support, and an abutment located below the projection and above the support. Preferably, the support bracket includes at least two opposing projections, at least two opposing supports, at least two opposing abutments, or a combination thereof that guide the brake pads during a brake apply and retain the brake pads within the support bracket during non-braking conditions (e.g., running). The leading side, the trailing side, or both of the support bracket may include one or more projections. The brake pads may be used in the brake system, and the brake pads may extend from an abutment on a trailing side of the support bracket to an abutment on a leading side of the support bracket. A pad clip may be configured to connect to the support bracket at the one or more projections. The pad clip may connect to the projection and extend over the projection of the support bracket.

The leading side, the trailing side, or both of the support bracket may include an inboard abutment and an outboard abutment. One or more abutments are preferably located below the one or more projections. The one or more abutments may extend between a projection and a support of the support bracket. Preferably, one or more of the abutments are configured to receive a brake pad directly or indirectly (i.e., with a pad clip).

The one or more abutments may prevent movement of the brake pad in the leading direction, the trailing direction, or both. For example, during a brake apply one or both of the brake pads may be moved in the trailing direction or the leading direction into contact with the abutment and the abutment may prevent further movement of the brake pads. The one or more abutments may function to restrict movement of the brake pads toward a support bracket during running. For example, the one or more abutments may restrict movement of the brake pads along the face of the abutment so that the brake pads are free of contact the projection, the support, or both. One or more of the abutments may be relatively linear, may have one or more bends or contours, may be a series of linear segments forming a curve, may be a continuous curve, or a combination thereof. One or more abutments preferably include one or more convex arcuate segments, one or more concave arcuate segments, or both. The convex and/or concave arcuate segments may be symmetrical, asymmetrical, bell curve shaped, tear drop shaped, have a steep slope on one end and a gradual slope on the opposing end, located entirely above and/or below a center point of each abutment, or a combination thereof. The one or more convex and/or concave arcuate segments, one or more bends or contours, or curves may extend along all or a portion of a length of the abutment. Preferably, the arcuate segment projects outwardly, toward the pad clip and the ear of the brake pad, beyond an abutment plane. A linear segment of the abutment and/or two endpoints of the arcuate segment may lie in the abutment plane. One or more of the abutments on the leading side, the trailing side, or both, may include a linear segment that may be located above, below, between, or combination thereof a convex arcuate portion, a concave arcuate portion, a bent portion, a curved portion, a contoured portion, or a combination thereof. For example, one or more of the abutments may include a linear segment located proximate to the projection and above the arcuate segment. One or more of the abutments may include a linear segment located proximate to the support and below the arcuate segment. The linear segment may be about 80% or less, about 60% or less, or even about 40% or less of a length of the abutment extending between the projection and the support. One or more of the abutments on the leading side, the trailing side, or both, may include a segment that has a different curvature or contour located above, below, between, or combination thereof, a convex arcuate portion and/or concave arcuate portion. The curved or contoured segment may be about 80% or less, about 60% or less, or even about 40% or less of a length of the abutment extending between the projection and the support.

The leading side, trailing side, or both of the support bracket may include one or more supports. The one or more supports may function to prevent radial movement of the brake pads downward, to connect the leading side of the support bracket to the trailing side of the support bracket, or both. The one or more abutments are preferably located above a support of the support bracket. The space in the support bracket defined by an underside of the projection, the abutment, and an upper side of the support is capable of receiving a brake pad, either directly or indirectly through a pad clip.

The brake system may include one or more brake pads. The one or more brake pads function to slow and/or stop a moving vehicle. Preferably, a pair of brake pads are used so that a braking force may be produced (e.g., an inboard brake pad and an outboard brake pad located on opposing sides of the rotor). The pair of brake pads may extend from an abutment on a trailing side of the support bracket to an abutment on a leading side of the support bracket. Each of the one or more brake pads may comprise a friction material and a pressure plate. The pressure plate may comprise one or more ears (e.g., an ear on a trailing side and an ear on a leading side). The one or more ears may function to form a connection with the support bracket so that the brake pads may be connected with the brake system. The ear on the trailing side and the ear on the leading side may be in communication with the abutment on the trailing side and the leading side of the support bracket and/or configured for placement directly or indirectly in the trailing abutment and the leading abutment of a support bracket, respectively. During a brake apply, the ear on the trailing side may be moved into contact with the abutment on the trailing side, or the ear on the leading side may be moved into contact with the abutment on the leading side.

The one or more ears of the brake pads may be a distinct outward projection from the body of the brake pad that functions to be inserted into the support bracket to hold the brake pad in place. For example, the one or more ears may have a top edge and a bottom edge. The top edge, the bottom edge, or both may be substantially linear, substantially parallel, or both. The top edge, bottom edge, or both may have one or more bends or contours, a series of linear segments, a continuous curve, or combination thereof. Preferably, the top edge, bottom edge, or both, is free of projections. Preferably, no portion of the top edge extends away from the bottom edge, no portion of the bottom edge extends away from the top edge, or both. The top edge and bottom edge are preferably generally parallel with each other, and preferably form a generally rectangular shape projecting outward from the body of the brake pad. The one or more ears may be located above a midpoint, below a midpoint, at the midpoint of the edge of the body of the brake pad, or combination thereof. The ear on the trailing end and the ear on the leading end of the brake pad may be co-linear. The brake pad may be generally symmetrical on both sides of a vertical center line.

The one or more ears of the brake pads may each have an end portion, which is located adjacent to the abutment when installed within the brake system. The end portion of the one or more ears may function to contact and/or create friction between the pad clip, abutment, or both, which may cause deceleration or stop the motion of the brake pad entirely as it approaches the support bracket. One or more of the end portions may be relatively linear, may have one or more bends or contours, may be a series of linear segments forming a curve, may be a continuous curve, or a combination thereof. One or more end portions preferably include one or more convex arcuate segments, one or more concave arcuate segments, or both. The convex and/or concave arcuate segments may be symmetrical, asymmetrical, bell curve shaped, tear drop shaped, have a steep slope on one end and a gradual slope on the opposing end, located entirely above and/or below a center point of each end portion, or a combination thereof. The one or more convex and/or concave arcuate segments, one or more bends or contours, or curves may extend along all or a portion of a length of the end portion. The end portion may have a continuous curvature. The end portion may be free of linear segments and/or free of one or more vertices. One or more of the end portions may include a linear segment or a segment of a different angle or curvature located above, below, or both, the convex and/or concave arcuate, bent, curved or contoured portion. The linear segment or segment of a different angle or curvature may be about 80% or less, about 60% or less, or even about 40% or less of a length of the end portion of the ear of the brake pad. The portions of the ear adjacent to the projection and adjacent to the support of the support bracket may also have linear segments, contoured segments, and/or arcuate segments.

The one or more ears of the brake pads may include one or more lobes. The one or more lobes may function to restrict movement of the brake pads toward the support bracket during running, a braking event, or both. The one or more lobes may move into contact with a portion of the support bracket abutment so that movement of the brake pads is substantially reduced and/or prevented. For example, during running, movement of the brake system may generate a force on the brake pads in the direction towards the projection and the one or more lobes may contact the abutment so that the movement is prevented, so that contact between the brake pad and projection is prevented, or both. The ears of the one or more brake pads may include an upper lobe, a lower lobe, a middle lobe, or a combination thereof. The ears may include one or more lobes, two or more lobes, or even three or more lobes. Preferably, the arcuate segment extends between the upper lobe and the lower and forms a concave recess therebetween so that the upper lobe, the lower lobe, or both extend outward beyond the concave recess. The shape of the ear may substantially mirror the shape of the pad clip and/or the abutment. The shape of the ear may be generally symmetrical between a midpoint creating a top half and a bottom half of the ear, wherein the upper lobe is located in the top half and the lower lobe is located in the bottom half. The shape of the ear may instead be not symmetrical between the top half and the bottom half, and one lobe may extend further than the other lobe (e.g., the upper lobe extending further than the lower lobe). The ear of the brake pad may connect to the support bracket using a pad clip as described herein, wherein the ear of the brake pad may generally fit in the contours of the pad clip to enter the area defined by a projection, a support, and an abutment of the support bracket.

The brake pads may be held in communication within the support bracket with one or more pad clips, one or more arcuate segments, one or more lobes, or a combination thereof. The pad clips may function to hold one or more brake pads, allow for low friction axial movement (relative to movement without the pad clip) of the brake pads, or both. One or more of the elements of a pad clip (e.g., a bridge, projection arm, abutment arm, connection arm, and the like) may be entirely linear or may have a linear segment, one or more bends, curves, contours, arcuate segments, linear segments forming a general curve shape, or combination thereof. The one or more curves, contours, bends, or arcuate segments may extend away from the support bracket, toward the support bracket, or both. One or more elements of the pad clip may have a continuous curvature. One or more elements of the pad clip may be free of linear segments and/or free of one or more vertices. One or more linear segments or a segment of a different angle or curvature may be located on one side or both sides of the arcuate segment of the element of the pad clip. The one or more linear segments or a segment of a different angle or curvature may be about 80% or less, about 60% or less, or even about 40% or less of a length of the element of the pad clip. Preferably, the pad clips connect an ear of one or more brake pads to the support bracket. More preferably, the pad clips are shaped to generally mirror the shape of a portion of the support bracket, the brake pads, or both (e.g., shaped to fit around the at least two opposing projections and/or within the at least two opposing abutments of the support bracket). The pad clip may be made of separate pieces. Preferably, the pad clip is one unitary piece. Preferably, the brake system includes at least two pad clips. More preferably, a first pad clip is placed on one side of the one or more brake pads, and a second pad clip is placed on the opposite side of the one or more brake pads. The brake system may include three pad clips. For example, one side may include a pad clip that holds both ears of both brake pads and the opposite side may have two discrete pad clips, each pad clip holding a single brake pad. The brake system may include four pad clips. Two pad clips may be placed on each side of the rotor and two pad clips may be placed on opposite ends of the one or more brake pads. The configurations discussed herein may be employed in one, two, three, four or more pad clip designs.

The one or more pad clips may comprise a bridge extending over a gap (e.g., a gap that the rotor rotates through). The bridge may connect two or more legs. The one or more pad clips may be free of a bridge. Each of the one or more pad clips may include one or more legs, preferably that project from the bridge. Preferably, the pad clip includes two opposing legs separated by the gap. The one or more legs may project laterally from the bridge, longitudinally from the bridge, or a combination thereof. Preferably, the one or more legs may project down, vertically, from the ends of the bridge and away from the bridge, from one or more sides of the bridge and away from the bridge, or a combination thereof from the bridge of the pad clip. Preferably, the one or more legs project out from one or both sides of the bridge. The one or more legs may be planar with the bridge. Preferably, the one or more legs may be substantially planar and/or include one or more substantially planar portions (e.g., about 50 percent or more, about 60 percent or more, or about 70 percent or more by length) with the bridge and may have one or more curved portions that are not planar with the bridge. The one or more legs may be substantially planar and include one or more substantially perpendicular portions that project away from the legs, the bridge, or both. When more than one leg is present, the legs may be generally parallel, generally symmetrical, generally planar, or a combination thereof relative to each other. The legs may be a single piece of material. The legs may be one or more pieces of material.

The one or more legs may include one or more features that hold the outside of the support bracket so that the pad clip is free of movement during a brake apply, a brake release, during brake wear, or a combination thereof. The one or more legs may include one or more features that generally match the contours of the support bracket. The one or more legs may include a portion that projects out from the bridge and includes a "U" shape. For example, the legs may include an angled bracket or contour that may substantially mirror the shape of the projection and/or the abutment of the support bracket.

The pad clip (e.g., legs, bridge, or both) may be made of metal. The pad clip may be made of titanium, aluminum, steel, copper, iron, nickel, cobalt or a combination thereof. More preferably, the legs may be made of stainless steel. Even more preferably, the pad clip may be made of a material that has a 301 3/4H when measured by ASTM A666 or may be SU301-CSP 3/4H when measured by JIS G4313. Preferably, the pad clip is made of 301 3/4H stainless steel. The pad clip may be made of a material that is resistant to corrosion. The pad clip may be made of any material capable of being formed. The pad clip may be made of a material that is deformable. Preferably, the pad clip may be made of a material that is elastically deformable. More preferably, the pad clip may be made of a material that may spring back to an original shape after the material is deformed so that the brake pads after deflecting the pad clip may be moved to a location between the ends of the support bracket and be substantially free of contact with the support bracket.

The one or more features of the one or more legs may include a projection arm that functions to attach the pad clip to the support bracket, generally hold or surround at least a portion of a projection of the support bracket, or both. The projection arm may include an upper portion, a lower portion, and a face portion, where the face portion connects the upper and lower portions. The pad clips may include one or more tabs that may be located on any part of the pad clip to retain the pad clip in its proper position. The one or more tabs may function to retain the pad clips within the brake system, prevent axial movement of the pad clips relative to the rotor, or both. The projection arm may have one or more tabs. The one or more tabs may extend from the sides of any portion of the projection arm (e.g., one or more tabs may extend generally perpendicularly from a side of the face portion and contact and secure the projection arm to the projection). The one or more tabs may assist in retaining the pad clip in place so the pad clip does not move during operation.

The lower portion of the projection arm may be connected to an abutment arm. The abutment arm may function to create a sliding surface for the brake pad during movement toward the support bracket, act as a barrier between the abutment and the brake pad, prevent the brake pad from directly and/or indirectly contacting the support bracket, or combination thereof. The abutment arm may extend between the projection arm and a connection arm. The abutment arm preferably has a length substantially similar to the length of the abutment of the support bracket or smaller. The abutment arm may be generally parallel to the abutment of the support bracket. The abutment arm may be generally angled away from the abutment of the support bracket (e.g., creating a gap between the abutment arm and abutment, wherein the gap distance generally increases as the abutment arm approaches the connection arm or the projection arm). For example, the abutment arm may extend at an angle of about 5 degrees or more, about 10 degrees or more, or about 15 degrees or more away from the abutment. The abutment arm may extend at an angle of about 60 degrees or less, about 45 degrees or less, or about 30 degrees or less away from the abutment. The abutment arm may be substantially flat and/or linear, may comprise a series of linear segments forming a curve, may be a continuous curve, or combination thereof. Preferably, the abutment arm includes one or more arcuate segments. The one or more arcuate segments may extend away from the support bracket, toward the support bracket, or both. The one or more arcuate segments may substantially mirror the shape of the abutment, have a shape complementary to the abutment, or both. The abutment arm may have a continuous curvature. The abutment arm may be free of linear segments and/or free of one or more vertices. The abutment arm may generally lie in a single plane. The one or more linear segments or segments having a different angle or curvature from an the arcuate segments may be about 80% or less, about 60% or less, or even about 40% or less of a length of the abutment arm.

The abutment arm may have one or more contact points with the abutment of the support bracket. The pad clip may be connected to the support bracket at the one or more contact points between the abutment and the abutment arm. The pad clip may contact the abutment along a portion of or the entire length of the pad clip. The abutment arm may have a cantilever connection with the lower portion of the projection arm so that the abutment arm extends in front of the abutment but is free of contact with the abutment when a brake pad is not installed, when a brake pad is installed, or both. The abutment arm may contact the abutment of the support bracket during non-braking or running conditions and/or as a brake pad approaches the support bracket. The abutment arm may contact the abutment of the support bracket in the general area where the projection and abutment connect (e.g., the area where the abutment arm and the lower portion of the projection arm connect). The abutment arm may contact the abutment of the support bracket where the abutment arm and the connection arm connect (e.g., as a first point of contact, or preferably a second point of contact). The abutment arm may contact the abutment at the endpoints of the arcuate segment of the abutment arm or the abutment arm may contact the abutment at the highest point of the arcuate segment if an arcuate segment projects toward the abutment. The abutment arm may be free of contact with the abutment where the abutment arm and the connection arm connect or at both endpoints of an arcuate segment. During movement of the brake pad, as an ear of the brake pad approaches the support bracket, the pad clip may flex to absorb the movement of the brake pad so that movement of the brake pad towards the abutment is reduced and/or stopped, which may reduce or eliminate noise, vibration, and harshness that previously occurred as a result of two components of the braking system contacting each other (i.e., a brake pad and the support bracket).

The one or more legs may further comprise a connection arm, which may be connected to the abutment arm opposite the lower portion of the projection. The connection arm may be located at the end of a leg, opposite the bridge. The connection arm may be generally flat and/or linear, may comprise a series of linear segments forming a curve, may be a continuous curve, or combination thereof. The connection arm may be free of linear segments and/or free of one or more vertices. The connection arm may have one or more bends, curves, or contours. The connection arm may have a shape to hold the ear of the brake pad in place. The connection arm may have a shape that generally mirrors the shape of the ear of the brake pad. The connection arm may include one or more arcuate segments. The one or more arcuate segments may be convex and extend away from the support bracket and toward the projection, concave and extend towards the support bracket, or both. The connection arm may be substantially parallel to the upper portion of the projection arm, the lower portion of the projection arm, both, or neither. The connection arm, or a portion of the connection arm, such as a terminal end of the connection arm, may instead be angled upward toward the projection arm. The connection arm, or a portion of the connection arm, may be angled downward toward the support of the support bracket. The shape of the connection arm may be adapted for receiving and securing an ear of a brake pad in place. The connection arm may contact a portion of the support of the support bracket. The connection arm may extend at an angle relative to the abutment of the support bracket. The angle may be an arcuate angle.

As disclosed herein, one or more of the elements of the brake system may have one or more arcuate segments. Preferably, an abutment arm of a pad clip includes an arcuate segment that is complementary with or substantially mirrors an arcuate segment of an ear of a brake pad, an abutment of the support bracket, or both. The arcuate segment of each of the ears of the brake pads may receive both the arcuate segment of the support bracket (i.e., the abutment) and the pad clip. The arcuate segment of the support bracket (i.e., the abutment) may instead receive both the arcuate segment of the ears of the brake pads and the pad clip.

The arcuate segment includes a maximum height. The maximum height may be the largest distance between the abutment arm of the pad clip and the abutment of the support bracket due to the shape of the curve of the abutment arm, the abutment, or both; the distance the arcuate segment extends away from a straight line that extends between the end points of the arcuate segment; or both. The maximum height of the arcuate segment may be located at any point between two endpoints of the arcuate segment (i.e., a chord). The maximum height may be at the center point of the chord, or the maximum height may be closer to one endpoint of the arcuate segment than the other endpoint. The location of the point of maximum height of the arcuate segment may be placed at an area that prevents or reduces radial movement, holds the ear of the brake pad in place, receives the most force from a brake pad if the brake pad is moving, or combination thereof. The chord may have a length X, with an arc length about 1.1X or more, about 1.2X or more, about 1.3X or more, or even about 1.4X or more. The arcuate segment chord may have a length X, with an arc length of about 5X or less, about 4X or less, about 3X or less, or about 2X or less. The arc length may be calculated using the following formula: Arc Length=2πR*(C/360), where C=the angle produced by the arc in degrees, and R=the radius of the circle. One or more of the arcuate segments may have a length to height ratio of about 2:1 or more, preferably about 3:1 or more, more preferably about 4:1 or more, and even more preferably about 5:1 or more. The one or more arcuate segments may have a length to height ratio of about 25:1 or less, preferably about 20:1 or less, more preferably about 15:1 or less, and even more preferably about 10:1 or less. The height may be measured from a plane which may be located between the two endpoints of the arcuate segment and the peak of the arc.

The one or more arcuate segments may function to substantially reduce and/or eliminate noise, vibration, harshness, or a combination thereof caused by two or more components of the braking system contacting each other. The one or more arcuate segments may reduce noise by slowing movement of the brake pad, preventing contact between the brake pad and the support bracket, or both. The one or more arcuate segments may prevent contact and/or reduce a force between an ear of a brake pad and the projection of the support bracket, the support of the support bracket, the abutment of the support bracket, or combination thereof. The arcuate segments may be located in the lower portion of the projection arm, the connection arm, or both and may resist radial movement of the brake pad so that contact between the ear of the brake pad and the projection and/or the support of the support bracket is substantially eliminated. The arcuate segments in the lower portion of the projection arm, the connection arm, or both may resist movement of the brake pad so that acceleration of the ear of the brake pad is reduced as the brake pad approaches the support bracket. The arcuate segment in the abutment and/or the abutment arm may also resist movement of the brake pad so contact between the ear of the brake pad and support bracket is substantially eliminated and/or acceleration of the ear of the brake pad as it approaches the support bracket is substantially reduced or eliminated. Preferably, the ear of the brake pad, the abutment arm of the pad clip, and the abutment of the support bracket all have an arcuate segment that is complementary so that the complementary arcuate segments substantially prevent movement of the brake pad in a radial direction (i.e., toward the projection or a support of the support bracket) during running conditions so that the brake pad is substantially prevented from contacting the support bracket and creating noise, vibration, or harshness. The brake system including one or more arcuate segments as taught herein may produce a noise of about 20 sone or less, about 15 sone or less, preferably about 10 sone or less, or more preferably about 8 sone or less, or even more preferably about 5 sone or less.

The shape of the arcuate segment of each respective part may be selected so that there are one or more points of contact. For example, the arcuate segment of the pad clip may be selected so that a portion, substantially all, or the entire abutment arm of the pad clip is in contact with the ear of the brake pad so that radial movement of the brake pad towards the projection and/or support is resisted and/or slowed. The one or more points of contact may function to create friction between the brake pad and the abutment and/or pad clip, decelerate or stop a moving brake pad, prevent motion of the brake pad, cause the pad clip to absorb forces from a moving brake pad, or combination thereof. If the upper and lower lobes of the brake pad are symmetrical, there may be two points of contact above and below a midpoint of an ear of the brake pad between the ear of the brake pads and the pad clip and/or abutment plane. The points of contact may be at the endpoints of the concave arcuate segment, which extend toward the pad clip. During a brake apply, when a lobe extends beyond the other lobe, the first lobe or a point adjacent to the first lobe may extend into contact with the trailing abutment or the leading abutment first. During running, the lobe that extends beyond the other may prevent a portion of the arcuate segment below a midpoint of the ear and the shorter lobe from contacting the leading abutment and/or the trailing abutment of the support bracket (e.g., a gap may be formed between the shorter lobe and the abutment arm and/or abutment). When the upper lobe projects out beyond the lower lobe, a point of contact may be established between the respective brake pad and the pad clip. The pad clip may also contact the support bracket abutment. The pad clip and support bracket may be located proximate to the upper lobe. The upper lobe may project out beyond the lower lobe so that a portion of the inboard brake pad and the outboard brake pad proximate to the lower lobe may be free of contact with the pad clip and the support bracket abutment in a running condition. The upper lobe may extend beyond the lower lobe so that a point of contact between the abutment and the brake pad is located above a midpoint of an ear of the brake pad. Because contact is made at or near the upper lobe, the brake pad is generally held in place and not permitted to rotate or slide further toward the support bracket, as friction may be created between the brake pad and the pad clip at the point of contact, so the lower lobe may not have a point of contact, which may reduce noise, vibration, and harshness. For example, if the upper lobe extends beyond the lower lobe, during a brake apply, a point adjacent to the upper lobe may extend into contact with the trailing abutment or the leading abutment first. During running, the friction created at the point of contact may hold the brake pad in place and/or prevent the portion of the arcuate segment below the midpoint of the ear and lower lobe from contacting the leading abutment, the trailing abutment or both.

If the lower lobe projects out beyond the upper lobe, a point of contact may be established between the respective brake pad and the pad clip. The pad clip may also contact the support bracket abutment. The pad clip and support bracket may be located proximate to the lower lobe. As a result of the lower lobe projecting out beyond the upper lobe, a portion of the inboard brake pad and the outboard brake pad proximate to the upper lobe may be free of contact with the pad clip and the support bracket abutment in a running condition. Because contact is made at or near the lower lobe below a midpoint of the ear of the brake pad, the brake pad is generally held in place and not permitted to rotate or slide further toward the support bracket, as friction may be created between the brake pad and the pad clip at the point of contact, so the upper lobe may not have a point of contact, which may reduce noise, vibration and harshness. In another example, if the lower lobe extends beyond the upper lobe, during a brake apply, the lower lobe or a point adjacent to the lower lobe may extend into contact with the trailing abutment or the leading abutment first. During running, the friction created at the point of contact may hold the brake pad in place and/or prevent the portion of the arcuate segment above the midpoint of the ear and the upper lobe from contacting the leading abutment, the trailing abutment, or both.

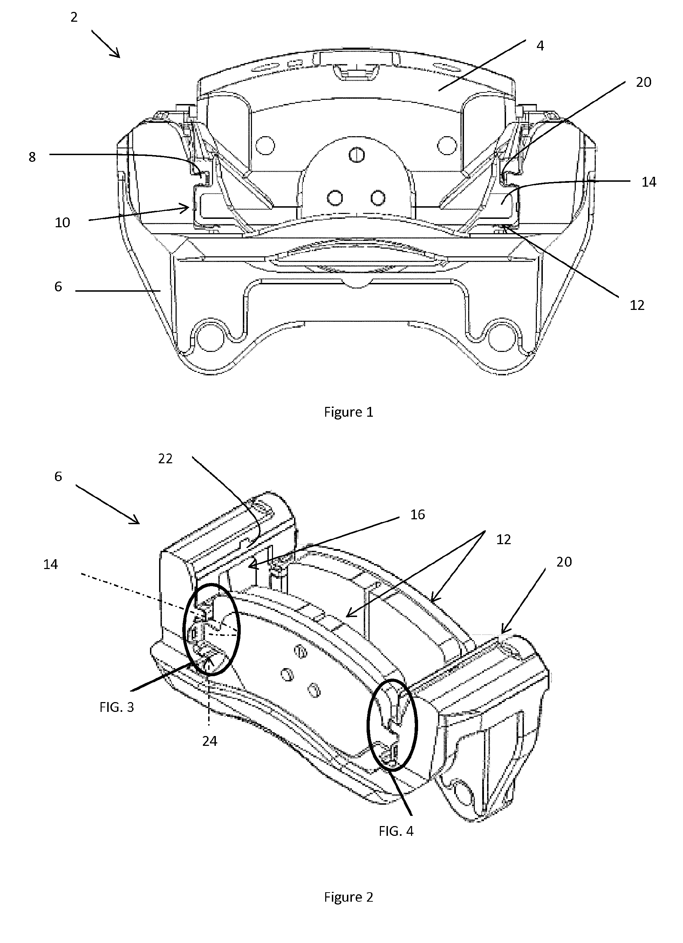

Figure 1 illustrates a brake system 2. The brake system 2 includes a support bracket 6 in communication with a caliper 4. The support bracket 6 includes a projection 8 extending over an abutment 10. An ear 14 of a brake pad 12 extends under the projection 8 and into communication with the abutment 10 of the support bracket 6. A pad clip 20 extends between the brake pad 12 and the support bracket 6.

Figure 2 illustrates a perspective view of a support bracket 6 with the caliper removed. A leading end and a trailing end of the support bracket 6 include pad clips 20. An ear 14 of each brake pad 12 extends from the trailing side to the leading side and into contact with the pad clip 20. The pad clip includes a pair of legs 24 that are connected by a bridge 22 that extends over a gap 16 for the rotor (not shown) to extend through the support bracket 6 between the brake pads 12.

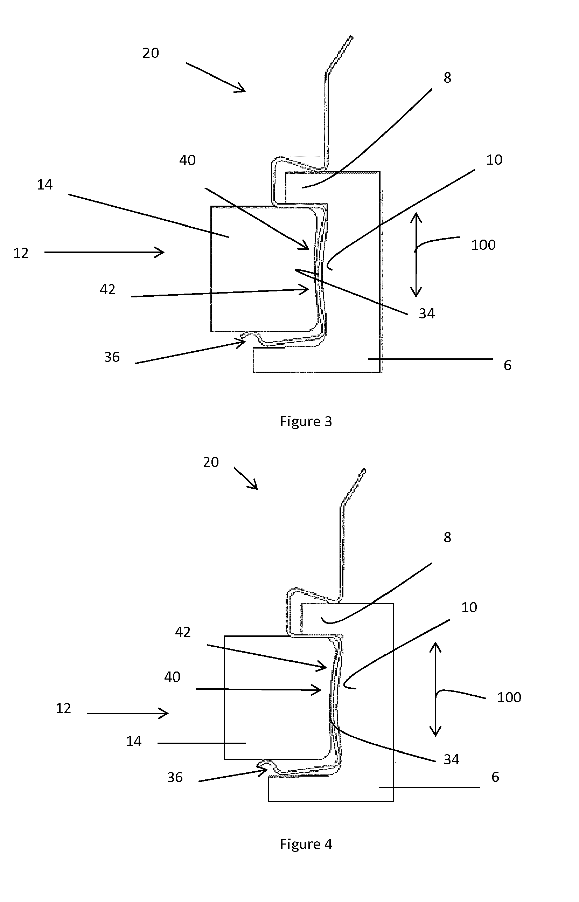

Figures 3 and 4 illustrate a side view of examples of an ear 14 of a brake pad in communication with a pad clip 20 and a support bracket 6. The pad clip 20 has a bridge 22, a projection arm 26 that receives a projection 8 of the support bracket 8, an abutment arm 34 with the arcuate segment 40 that is complementary with the arcuate segment of the ear 14 and the support bracket 6, and a connection arm 36 that forms a connection with the brake pad 12. The support bracket 6 includes a projection 8 that extends over a portion of the ear 14 and forms a connection point for the pad clip 20 and an abutment 10 so that during a braking event the ear 14 is moved into contact with the abutment 10 so that further movement of the brake pad 12 with a rotor (not shown) is prevented.

Figure 3 illustrates the ear 14 of a brake pad 12 includes an arcuate segment 40 that has a point of contact 42 with the abutment arm 34 of the pad clip 20 and the arcuate segments 40 of the abutment 10 of the support bracket 6 on the bottom half of each respectively. The ear 14 is located between the projection 8 of the support bracket 6 and the connection arm 36 and during movement of the brake pad 12 in the radial direction 100 contact made at the point of contact 42 so that movement of the brake pad 12 in the radial direction 100 is restricted and/or prevented.

Figure 4 illustrates the ear 14 of a brake pad 12 includes an arcuate segment 40 that has a point of contact 42 with the abutment arm 34 of the pad clip 20 and the arcuate segments 40 of the support bracket 6 on the top half of each respectively. The ear 14 is located between the projection 8 of the support bracket 6 and the connection arm 36 and during movement of the brake pad 12 in the radial direction 100 contact made at the point of contact 42 so that movement of the brake pad 12 in the radial direction 100 is restricted and/or prevented.

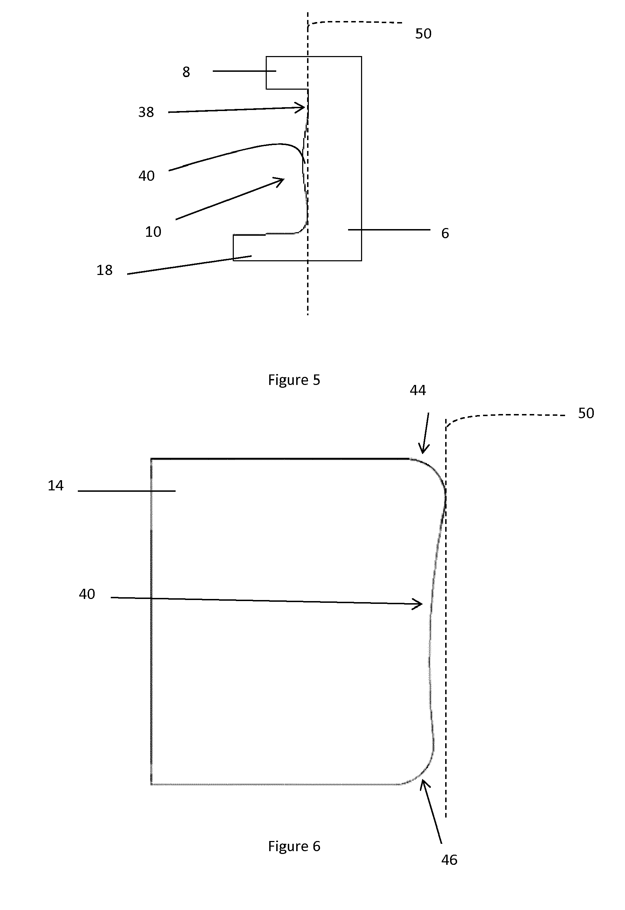

Figure 5 illustrates a close-up view of an abutment 10 and projection 8 of a support bracket 6 with the other components of the brake system removed. The abutment 10 includes a linear segment 38 below the projection 8 and above an arcuate segment 40 that projects out beyond an abutment plane 50 and is generally convex. The abutment 10 extends from the projection to the support 18 and is configured to receive a brake pad (not shown).

Figure 6 illustrates a close-up view of an ear 14 of a brake pad. The ear 14 includes an arcuate segment 40 that is generally concave. The arcuate segment 40 projects inward away from an abutment plane 50. The ear 14 has an upper lobe 44 and a lower lobe 46, and the upper lobe 44 extends out beyond the lower lobe 46 and touches the abutment plane 50 so that a point of contact 42 (shown in Figure 4) is near the upper lobe when the ear 14 is installed in a support bracket (not shown).

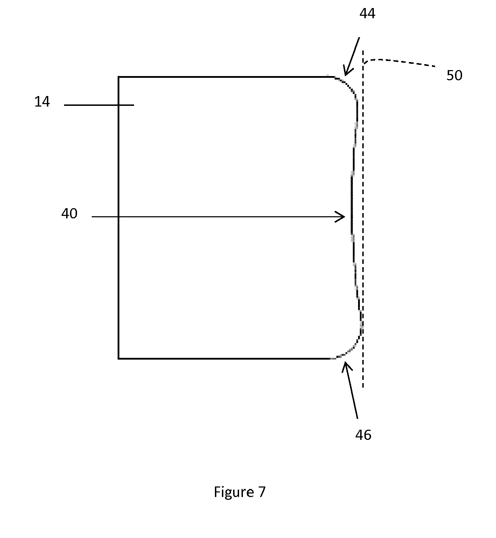

Figure 7 illustrates a close-up view of another example of an ear 14 of a brake pad. The ear 14 includes an arcuate segment 40 extending between an upper lobe 44 and a lower lobe 46. The upper lobe 44 and lower lobe 46 extends towards an abutment plane 50 and the arcuate segment 40 extends away from the abutment plane 50. The lower lobe 46 projects out beyond the upper lobe 44 and into contact with the abutment plane 50 so that when the ear 14 is installed in a support bracket (not shown) a point of contact 42 (shown in Figure 3) is located proximate to the lower lobe 46.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. The use of the terms "comprising" or "including" to describe combinations of elements, ingredients, components or steps herein also contemplates embodiments that consist essentially of the elements, ingredients, components or steps. By use of the term "may" herein, it is intended that any described attributes that "may" be included are optional.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.
- 2: brake system
- 4: caliper
- 6: support bracket
- 8: projection
- 10: abutment
- 12: brake pad
- 14: ear
- 16: gap
- 20: pad clip
- 22: bridge
- 34: abutment arm
- 36: connection arm
- 38: linear segment
- 40: arcuate segment
- 42: point of contact
- 44: upper lobe
- 46: lower lobe
- 50: abutment plane
- 100: radial direction

## Claims

1. A brake pad (12) comprising:
a. friction material and
b. a pressure plate comprising:
i. an ear (14) on a trailing side and
ii. an ear (14) on a leading side;
wherein the ear on the trailing side and the ear on the leading side are configured for placement in a trailing abutment (10) and a leading abutment (10) of a support bracket (6) respectively so that during a brake apply the ear on the trailing side is moved into contact with the abutment on the trailing side or the ear on the leading side is moved into contact with the abutment on the leading side; and
wherein the ear on the trailing side, the ear on the leading side, or both include an arcuate segment (40) forming a concave recess that has a continuous curvature.

2. The brake pad of claim 1, wherein both the ear on the trailing side and the ear on the leading side include the arcuate segment (40), and
wherein the ear on the trailing side and the ear on the leading side include an upper lobe (44) and a lower lobe (46) with the arcuate segment (4) extending between the upper lobe (44) and the lower lobe (46).

3. The brake pad of claim 2, wherein the upper lobe (44) extends beyond the lower lobe (46) so that during a brake apply the upper lobe extends into contact with the trailing abutment (10) or the leading abutment (10) first, during running the upper lobe prevents the arcuate segment and lower lobe from contacting the leading abutment and/or the trailing abutment of the support bracket (8), or both.

4. The brake pad of claim 2 or claim 3, wherein the lower lobe (46) extends beyond the upper lobe (44) so that during a brake apply the lower lobe extends into contact with the trailing abutment or the leading abutment first, during running the lower lobe prevents the arcuate segment (40) and upper lobe from contacting the leading abutment and/or the trailing abutment of the support bracket, or both.

5. A support bracket (6) comprising:
a. a leading side and
b. a trailing side, the leading side and the trailing side both comprising:
i. a projection (8) and
ii. an abutment (10) located below the projection (8);
wherein the abutment includes a convex arcuate segment (40).

6. The support bracket of claim 5, wherein the abutment (10) on the leading side, the trailing side, or both includes a linear segment (38) located proximate to the projection (8) and above the arcuate segment (40), and
wherein an abutment plane (50) is coplanar with the linear segment (38) and the arcuate segment (40) extends beyond the abutment plane (50).

7. The support bracket of claim 6, wherein the abutment (10) extends between the projection (8) and a support, and the abutment plane (50) has a length X extending between the projection (8) and the support and the arcuate segment extending between the projection and the support has an arc length of about 1.1X or more.

8. The support bracket of claim 6 or claim 7, wherein the linear segment (38) is about 40 percent or less of a length of the abutment (10) extending between the projection (8) and a support, and
wherein a height of the arc segment (40) is about 1 mm or more and about 5 mm or less.

9. A brake system (2) comprising:
a. a caliper (4);
b. support bracket (6) in communication with the caliper (4), the support bracket (6) comprising:
i. a leading side and
ii. a trailing side, the leading side and the trailing side both comprising:
1. a projection (8) and
2. an abutment (10) located below the projection (8);
wherein the abutment (10) includes a convex arcuate segment (40);
c. an inboard brake pad and an outboard brake pad each comprising:
i. friction material and
ii. a pressure plate comprising:
1. an ear (14) on a trailing side and
2. an ear (14) on a leading side;
wherein the ear (14) on the trailing side and the ear on the leading side are in communication with the abutment (10) on the trailing side and the leading side of the support bracket respectively so that during a brake apply the ear on the trailing side is moved into contact with the abutment on the trailing side or the ear on the leading side is moved into contact with the abutment on the leading side;
wherein the ear on the trailing side, the ear on the leading side, or both include an arcuate segment (40) forming a concave recess;
d. a pad clip (20) located between the support bracket (6) and the inboard brake pad and the outboard brake pad respectively, wherein the pad clip (20) includes an arcuate segment (40); and
wherein the arcuate segment (40) of the support bracket (6), the pad clip (20), and the ear of the inboard brake pad and the ear of the outboard brake pad are complementary.

10. The brake system of claim 9, wherein the arcuate segment (40) of each of the ears (14) of the brake pads (12) receive both the arcuate segment (40) of the support bracket (6) and the pad clip (20).

11. The brake system of claim 9 or claim 10, wherein the inboard brake pad and the outboard brake pad each include an upper lobe (44) and a lower lobe (46) and the arcuate segment (40) extends between the upper lobe and the lower lobe.

12. The brake system of claim 11, wherein the upper lobe (44) projects out beyond the lower lobe (46) so that when the inboard brake pad and the outboard brake pad are installed in the support bracket (6), a point of contact between the respective brake pad (12) and the pad clip and support bracket abutment (40) is located proximate to the upper lobe. (44)

13. The brake system of claim 11 or claim 12, wherein the lower lobe (46) projects out beyond the upper lobe (44) so that when the inboard brake pad and the outboard brake pad are installed in the support bracket (6), a point of contact between the respective brake pad (12) and the pad clip (20) and support bracket abutment (40) is located proximate to the lower lobe (46).

14. The brake system of claim 12 or claim 13, wherein a portion of the inboard brake pad (12) and the outboard brake pad (12) proximate to the lower lobe (46) is free of contact with the pad clip (20) and the support bracket abutment (40) in a running condition, and
wherein a portion of the inboard brake pad and the outboard brake pad proximate to the upper lobe is free of contact with the pad clip and the support bracket abutment in a running condition.

15. The brake system of any of claims 9 through 14, wherein the arcuate segment (40) in the ear (14) of the brake pad (12), the pad clip (20), and the abutment (40) of the support bracket (6) substantially prevents movement of the brake pad (12) in a radial direction, towards the projection (8) of a support of the support bracket (6), so that during running conditions the brake pad (12) is substantially prevented from contacting the support bracket (6) and creating noise, vibration, or harshness.
